(19) Europäisches Patentamt
European Patent Office
Office européen des brevets

(11) **EP 0 484 160 B1**

(12) **EUROPEAN PATENT SPECIFICATION**

(45) Date of publication and mention
of the grant of the patent:
**30.09.1998 Bulletin 1998/40**

(51) Int Cl.⁶: **G06K 11/08**

(21) Application number: **91310077.2**

(22) Date of filing: **31.10.1991**

(54) **Position and function input system for a large area display**

Positions- und Funktionseingabesystem für Grossoberflächenanzeige

Système d'entrée de la position et de la fonction pour écran à grande surface

(84) Designated Contracting States:
**DE FR GB**

(30) Priority: **02.11.1990 US 608439**

(43) Date of publication of application:
**06.05.1992 Bulletin 1992/19**

(73) Proprietor: **XEROX CORPORATION**
**Rochester, New York 14644 (US)**

(72) Inventors:
• **Elrod, Scott A.**
**Palo Alto, CA 94301 (US)**
• **Tang, John**
**Palo Alto, CA 94306 (US)**

• **Minneman, Scott L.**
**San Francisco, CA 94131 (US)**
• **Jackson, Warren B.**
**San Francisco, CA 94116-1407 (US)**

(74) Representative: **Reynolds, Julian David et al**
**Rank Xerox Ltd**
**Patent Department**
**Parkway**
**Marlow Buckinghamshire SL7 1YL (GB)**

(56) References cited:
**EP-A- 0 347 725        FR-A- 1 597 348**

• **PATENT ABSTRACTS OF JAPAN vol. 10, no. 97 (P-446)15 April 1986**

## Description

This invention relates to a wireless optical input device for simultaneously, in a single beam, entering position and function information into an electronic system. Plural, uniquely encoded input devices are particularly suitable for use in a collaborative system, wherein multiple persons may work together for supplying input information to a single large area display.

Computer systems generally incorporate a display unit for providing a visual indication to the user of selected data. A specific location marker, such as a pointer, may be moved by the user to any desired point on the display in order to locate a cursor for the entry of keystroke characters, to trace the locus of points as in drawing alphanumeric characters or other patterns, to invoke and manipulate a functional command such as paint or erase, to open a menu, to invoke a displayed command, or other interface functions. In each case the location of the pointer must be known and in many applications the desired control function should be known as well.

Pointer positioning, as a computer input device, has been commonly effected in a variety of different ways. For example, by designated keys on a keyboard, by a freely movable "mouse" having one or more function selection buttons thereon, by a "joystick", and by means of a stylus upon a graphics input tablet. Each has its own unique advantages. Keyboard input allows the user to designate a location without removing hands from the keyboard, a mouse is easily and rapidly movable over a pad in correspondence to the display area and its function selection buttons allow various common subroutines to be invoked, the joystick is also a rapid positioning device, and the stylus enables freehand input.

The known light pen is another computer input device which gives the user the direct interactive "feel" of drawing on the display surface. It is usually in the nature of a receiver (not a transmitter), for use with a rastered video display screen, and receives timing information from the raster scan. Therefore, it is hard wired to the computer for transmitting the received signals thereto so that the timing information may be translated into positional data which, in turn, is used by the computer software to control the position of the pointer on the screen.

In a collaborative working environment, where several users wish to view and manipulate displayed information simultaneously, it is desirable to provide a large area display measuring several feet across (both horizontally and vertically). Each of the multiple users thereof would manipulate a light pen which could be used simultaneously and independently for controlling its related pointer on the display in order to position a cursor, select an item from a menu, draw upon the display screen, or perform any of a number of standard functions. In this way the actions of each user would be readily visible to all the members of the group who would interact together much as they would relative to a chalkboard. Clearly, when used in this manner the hard wired, receiver-type light pen would be a hindrance to ease of communication.

A direct input device for such a large area display system should desirably comprise a wireless light pen emitting optical radiation which could be detected behind the display screen. It should be equally usable, relative to the display screen, as a remote pointer, by users comfortably seated several feet from the screen, as well as in "writing" contact with the screen. It should be capable of pixel location accuracy and should be carefully designed for environmental safety so that, at normal distances of use, its optical beam would be incapable of focusing a light spot on the eye and causing eye damage.

Despite the seemingly inconsistent requirements that the light beam should not cause eye injury, and yet be able to identify accurately pixel locations when operated several feet from the display screen, it is nevertheless an object of this invention to provide a system which will enable a noninjurious beam of optical radiation incident upon a display screen to be resolved to the pixel level.

JP-A-60 230 228 discloses a screen on which a projection may be projected onto one side and a spot of light from a light pen may be projected onto the opposite other side of the screen. X and Y coordinate values for the spot of light is determined by a position detecting device.

EP-A-0 347 725 discloses an electronic blackboard having a writing surface covering a position detecting portion, multiple cordless devices for operating on the writing surface, and an output device from which printed sheets are discharged. The cordless devices comprise an instruction rod, a writing tool or marker, and an eraser. Information from the particular cordless device used and the information about the position are supplied to a data processor via the position detecting portion, so that display information which has been subjected to a predetermined process by means of the instruction rod, writing tool, or eraser may be viewed on the blackboard writing surface or directed to the output device.

It is an object of this invention to provide an interactive display system capable of simultaneously receiving the optical input of plural sources of illumination, for example plural wireless light pens, wherein the input of each will identify its projected location, at the pixel level, and each may be used to invoke plural functions.

The present invention provides two or more input devices for simultaneously and independently entering position and function information into an electronic system comprising a large area viewing surface upon which is displayed information generated by the electronic system. The output illumination of each input device uniquely identifies the source and the function to be performed and is projected as a light spot upon the display surface. All of the projected illumination falls upon a sensor which generates output signals representative of the total optical input of the light spots. These output signals pass through discrimination electronics for generating signals representative of the locations of the centroids of each of the light spots relative to the viewing surface and signals representative of the identified functions to be performed.

In one aspect of the invention there is provided an input system for entering position and function information received from each of two or more sources into an electronic system, comprising a viewing surface having a first side and a second side opposite the first side, said viewing surface receiving illumination from two or more unique sources of illumination simultaneously projected upon said first side at said viewing surface, the optical output of each one of said sources being encoded to identify said one of said sources and one of two or more functions to be performed, means for displaying said information upon said viewing surface, and the electronic system, including: means for sensing illumination simultaneously projected upon said viewing surface by at least two of said sources of illumination and for generating output signals representative thereof, said means for sensing being located on said second side of said viewing surface, and means for receiving said output signals and for determining therefrom the identification of said illumination sources, the position or positions of said projected illumination from said sources on said viewing surface, and the identification of the functions to be performed, and means for receiving said output signals and for determining therefrom the identification of said illumination sources, the position or positions of said projected illumination from said sources on said viewing surface, and the identification of the functions to be performed.

By way of example only, embodiments of this invention will be described with reference to the accompanying drawings wherein:

Figure 1 is a schematic representation of a projection display system and a light pen digitizing system,
Figure 2 is a side sectional view through a light pen,
Figure 3 is a schematic representation of three light pens and their clustered function frequencies,
Figure 4 is a block schematic of the light pen electronics,
Figure 5 is a block schematic of the sensing and cursor control electronics for a single light pen,
Figure 5a is a timing diagram associated with the sampling electronics,
Figure 6 is a schematic representation of an alternative encoding arrangement for the light pens (one shown),
Figure 7 is a schematic representation of another encoding embodiment for source and function identification of the light pens, and
Figure 7a is a schematic representation of two alternative combined input signals at different phase relations.

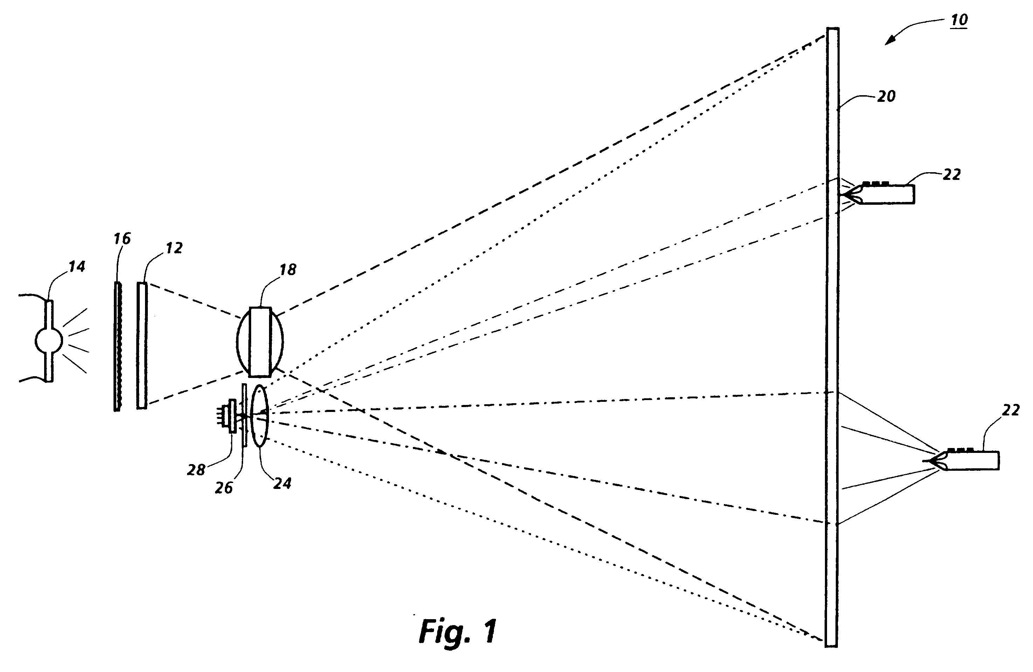

Turning now to the drawings, there is illustrated in Figure 1 a large area display terminal 10 in the form of a rear projection system comprising a one million pixel liquid crystal light valve panel 12, controlled by a computer (not shown). The panel 12 is interposed between a high intensity projection lamp 14, such as a 650 watt Xenon arc lamp, focused by fresnel lens 16, and a 270mm projection lens 18. The image is magnified about fivefold to illuminate, at about twenty spots per inch (one inch = 2.54 cm), a slightly convex curved (as viewed) display screen 20 having an area of about three feet by five feet (91.5 cm by 152.5 cm). The screen 20 is preferably made of plastic and is etched to diffuse light for providing sufficient non-directionality to the viewing angle so that viewers need not be located directly in front of it.

Two or more wireless light pens 22 (two shown) each project a beam of infrared (IR) light from a light source such as an LED onto the front surface of the screen 20 at a location where the user desires to indicate input, such as, locating a pointer. Being wireless, each pen has enhanced usability as a collaborative tool since the pens can be used as light spot projection devices at optimum distances between the screen surface and several feet from it. When the user is writing upon the screen it is preferable to maintain the light pen in contact with the surface being written upon. However, when the user is merely pointing or activating window or menu items upon the screen, it would be quite practical to project the light spot from several feet away from the screen. It should be noted that as a remote pen projects a larger light spot, the effective zone of accurate usage gets closer to the center of the screen because too much light falls off the screen. With wired pens and multiple users, the wires would probably get tangled in this collaborative mode of usage.

IR projected light is used, together with an IR sensitive sensor (to be described), so as to minimize the amount of interference from spurious light sources. For safety reasons, the light beam projected from each light pen 22 should be significantly divergent, rather than being collimated. A light pen having a projection half-angle at half-intensity of about 25°, held about two feet from the screen, will project a usable IR light spot about two feet in diameter upon the three by five foot screen (one foot = 30.48 cm).

As the IR light spot on the screen is not in the visible range, the user's feedback is solely the feedback generated by the electronic system and presented on the display from the information which is obtained by the sensor and suitable electronics. A large curvature demagnification lens 24, of about 90x magnification, directs the IR light spot through an IR filter 26 which blocks out spurious light and then focuses the spot upon a position sensing photodiode 28, such as the UDT SC25D quadrant detector, from United Detector Technology of Hawthorne, CA. This device has its highest sensitivity in the IR range and is a continuous dual axis position sensor that provides both X and Y axis position information. It senses the centroid of a light spot and provides continuous analog outputs as the spot traverses the active area. Suitable electronic instrumentation (to be described) allows the X.Y coordinates to be separated and displayed as a pointer upon the projection screen 20. The 61cm (two foot) diameter light spot noted above, when demagnified through lens 24. appears as a projection of about 0.76cm (0.3 inch) in diameter on the 1.88cm (0.74 inch) by 1.88cm (0.74 inch) active surface of detector 28.

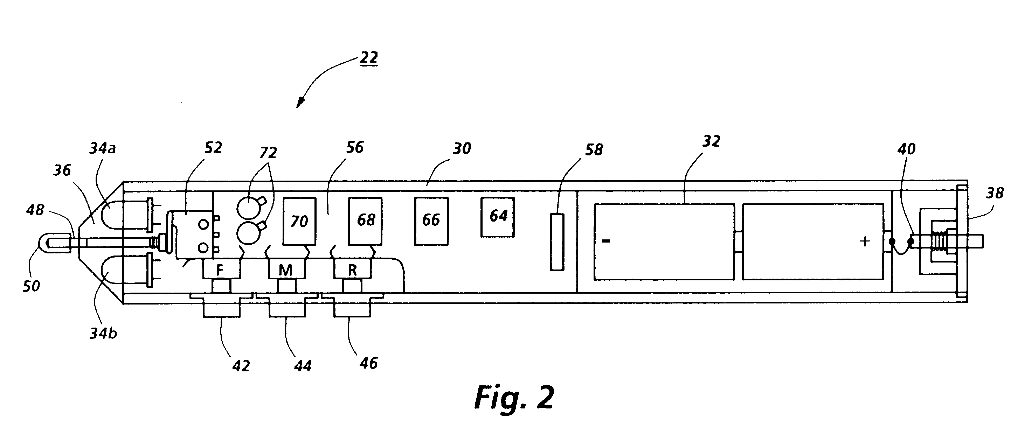

A light pen 22 is more clearly shown in Figure 2. It comprises a tubular body 30 about 1.91cm (0.75 inch) in diameter, comparable in size to a whiteboard dry erase marking pen. It is cordless and is provided with its own power source, in the form of two nickel-cadmium rechargeable batteries 32 which, connected in series, generate about 2.4 to 2.7 volts. The optical output of the light pen emanates from four LED light sources 34a, 34b, 34c and 34d (only two shown), such as HEMT-3301 from Hewlett-Packard of Palo Alto, CA, mounted at the front of the pen around a generally conical tip 36. Each of the four LEDs emits about 6mw of power, cumulatively about 25mw, resulting in sufficient intensity to enable a high signal-to-noise ratio. At such a power level, care must be taken to diverge the light to prevent eye damage. To this end each LED has a cover lens, resulting in the aforesaid projection cone half-angle at half-intensity of about 25°. At the rear end of the pen there is a suitable recharging connection 38 and a disabling switch 40 which electrically disconnects the light sources from the batteries when the pen is seated within a recharging recess in a recharging tray (not shown). The recharging tray is preferably mounted directly adjacent to the projection screen 20 in order to conveniently house the light pens and to maintain them at maximum charge at all times.

Three function selection buttons 42, 44 and 46 (front, middle and rear), comparable to mouse buttons, are conveniently located at the front of the light pen to be easily accessible to the user during manipulation thereof. Of course, more or fewer function selection buttons may be provided. Protruding from the conical tip 36 is a pin 48 sheathed in a Delrin sleeve 50 for ease of sliding movement over the display screen 20 and to limit scratching of the plastic screen surface. Contact of the tip with the display activates a tip contact switch 52, via the pin 48, which invokes the same function command as the front button 42, to which it is connected in parallel.

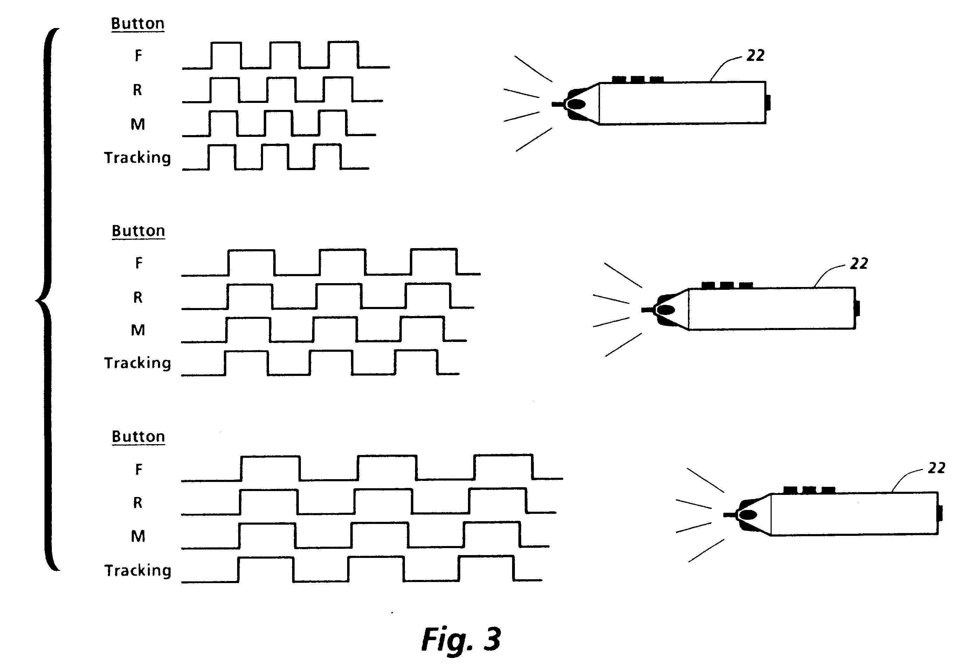

When several light pens are used simultaneously, the output signal of each one must be differentiable from that of the others so that "marks" of one user are not confused with those of another. Additionally, since each pen is provided with three function selecting control buttons 42, 44 and 46, the output signal representative of each of these, plus a "tracking" function (i.e. light source ON with no button depressed and pen movement is tracked by the cursor), must be differentiable from all other signals. In order to differentiate the light pen of each user and the several functions invoked by each, the light sources are encoded, as by chopping, so that their outputs are at different frequencies. As illustrated in Figure 3, the four frequencies, representative of button states, are closely clustered (about 1% apart) and the mean frequency for each pen is sufficiently remote from the others so as to be accurately differentiable at sufficiently high speed. The mean frequencies for pen identification are easily electronically distinguishable from one another by bandpass filtering, while the closely clustered, function identifying frequencies are sufficiently different from one another to be differentiable with a frequency-to-voltage converter circuit and subsequent comparators.

It has been found to be desirable to modulate the light sources at rates above 1000 Hz. For example, the four PEN #1 frequencies could be clustered around 4480 Hz, the four PEN #2 frequencies around 5830 Hz, and the four PEN #3 frequencies around 7650 Hz. More specifically, the four button state frequencies could be as shown in the following table:

|        | PEN#1   | PEN#2   | PEN#3   |
|--------|---------|---------|---------|
| Track  | 4539 Hz | 5907 Hz | 7752 Hz |
| Middle | 4500    | 5856    | 7684    |
| Rear   | 4461    | 5805    | 7617    |
| Front  | 4422    | 5755    | 7551    |

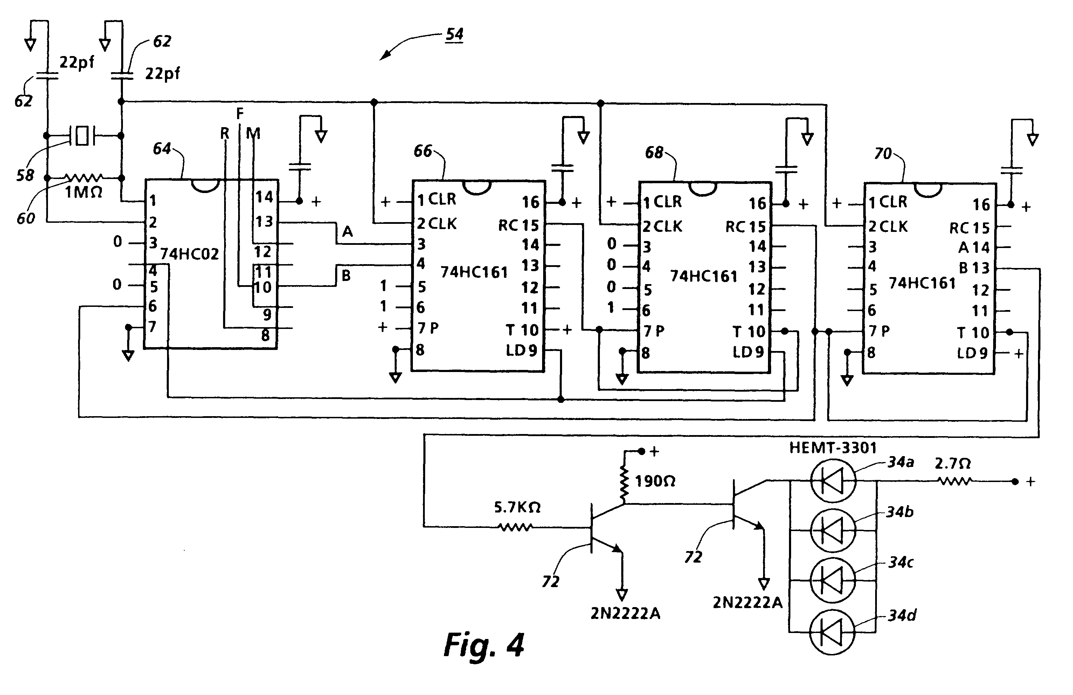

In order to generate the several required frequencies, the LEDs of each pen are controlled by a chopping circuit 54 mounted upon a circuit board 56 housed within the pen, as illustrated in Figure 4. A crystal oscillator, causing a crystal 58 to resonate at its natural frequency, comprises the crystal, its biasing resistor 60 and biasing capacitors 62, and an inverter comprising a single NOR gate of a 74HC02 high speed CMOS chip 64. Based upon the exemplary frequencies, set forth in the above table, and the dividing circuitry (described below), the three custom quartz crystals (from Hi-Q of Olathe, KS) which have been selected are 2.05184 MHz, 2.67014 MHz and 3.50370 MHz.

The CMOS chip 64 includes four independent NOR gates. Two additional NOR gates of the chip are used for button identification. Three inputs R, F and M, from the rear, front and middle buttons, to two of the NOR gates enable an output of two bits (A and B), from pins 10 and 13, for identification of the necessary four button states (i.e. front, middle, rear and tracking). A dividing circuit comprising three 74HC161 high speed CMOS counter/divider chips 66, 68 and 70 divides down the crystal resonant frequency to the four closely clustered frequencies, based upon the variable A and B bits fed into the first counter/divider chip 66 and the fixed inputs. The 74HC series chips have been selected because they will operate at low voltage output of the light pen batteries.

The first two counters/dividers 66 and 68 are combined in order to divide the crystal clock signal fed to each, based upon the A and B variable inputs from the button identification chip 64 (to pins 3 and 4 of counter 66), the fixed inputs 1, 1 (to pins S and 6 of counter 66) and the fixed inputs 0, 0, 0, 1 (to pins 3, 4, 5 and 6 of counter 68). Their collective count will result in a divisor, which will be 113, 114, 115 or 116, depending upon the four possible A and B inputs of 11, 01, 10 and 00, which then will be fed to the last counter/divider 70 whose second (of four) output port (pin 13) represents a further division by 4. Thus, in PEN #1 the 2.05184 Mhz input to the cascaded counters would be divided by 452, 456, 460 or 464 depending upon which function is invoked. The resultant signals of 4539 Hz, 4500 Hz, 4461 Hz and 4422 Hz enable and disable the transistors 72 (2N2222A) for chopping the light output signal (i.e the modulation is from ON to OFF) from light sources 34a, 34b, 34c and 34d.

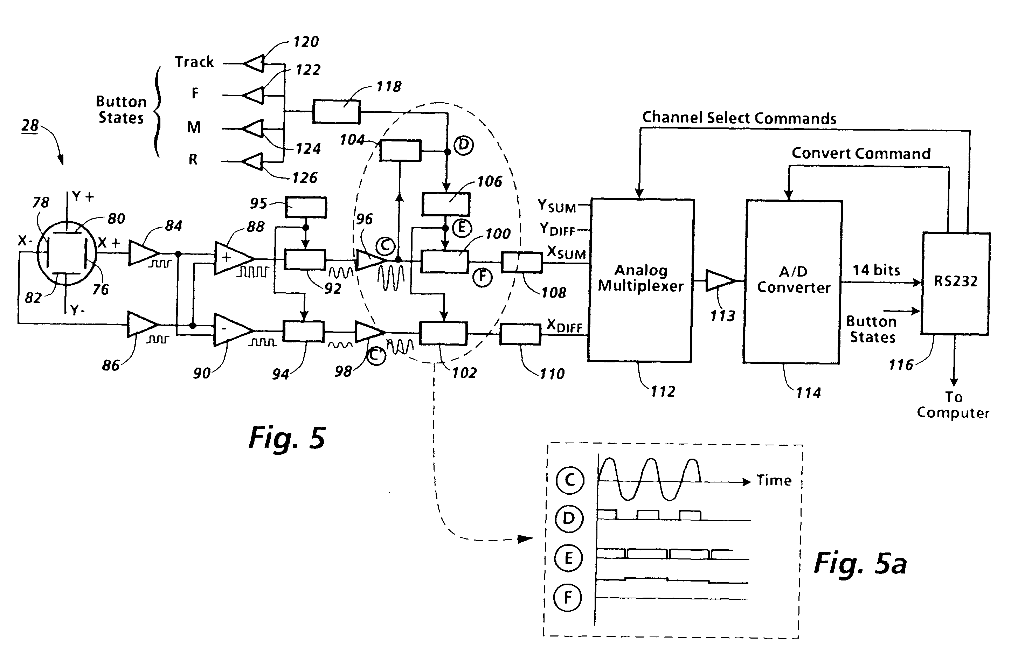

As has been described, the multiple signals from each light pen are achieved by chopping the optical output of the pens to produce a family of closely clustered frequencies. It then becomes necessary to electronically discriminate among the various frequency components in the photodiode output. The circuit of Figure 5 schematically illustrates one such technique wherein narrowband filters are used to separate the X and Y positions of one light pen from the X and Y positions of another.

Although only a single pen, operated at a single frequency is shown and described, it should be understood that a number of pens (e.g. three) can be used simultaneously and independently.

The position sensing photodiode 28 includes four (two opposed pairs) electrodes 76 (X + ), 78 (X-), 80 (Y + ) and 82 (Y-) each of which generates a current signal as a function of the light intensity and position of the centroid of the light spot projected thereon. If several pens are being used, they simultaneously project optical signals chopped at different frequencies. The output signals from the detector electrodes will be a complex superposition of square waves at those frequencies. These complex waves will be separated in the circuit described below wherein only representative signals for the X-axis are shown. It should be understood that the Y-axis signals are handled in a similar manner.

X+ and X- square wave current signals are converted to voltage signals and amplified at amplifiers 84 and 86. Initially the principal noise in the system is the detector noise so care is taken to amplify the signal to a usable level without introducing noise to the signal. These front end amplifiers are ultra-low noise devices, OP-27G from Analog Devices of Norwood, MA. Then both signals pass to standard sum and difference amplifiers 88 and 90 for determining location. The sum of X+ and X- will always have the same phase relationship to the pen modulation and will be a fairly large signal, while the difference can either be in phase (on one side of the center of the detector) or 180° out of phase (on the opposite side of center). Next, the $X_{sum}$ and $X_{diff}$ signals, which include fundamental and higher level harmonic frequency components (since they are comprised of square waves), are each passed through a switched capacitor narrow bandpass filter 92 and 94 tuned to a very narrow predetermined frequency range by a crystal controlled clock 95 so as to pass the cluster of frequencies for a specific pen. The outputs of the bandpass filters are sine waves at the first harmonic frequency. Once again the output signals are amplified by amplifiers 96 and 98 in order to be able more easily to extract amplitude and frequency information representative of position and function.

If more than a single light pen is used, the pen identification cluster of frequencies for a given pen could be separated by use of a bandpass filter whose center frequency would be clock controlled for varying the signal which will be passed. In this manner, the $X_{sum}$ and $X_{diff}$ (as well as the $Y_{sum}$ and $Y_{diff}$ signals) would be scanned and the clustered family of frequencies would be sequentially passed. It would be better, however, to use dedicated bandpass filters, each tuned to the expected mean frequency of the clustered family, in order to keep the speed of the system high. There is a significant transient which occurs when the switched capacitor filter center frequency is altered by changing the clock frequency.

The $X_{sum}$ and $X_{diff}$ sine wave signals then pass to sample and hold circuits 100 and 102 controlled by a signal shunted from the $X_{sum}$ sine wave. The shunted signal (C) (note Figure 5a) fires a zero crossing detector 104 so that each time the sine wave (C) crosses zero, the output signal changes between low and high (0 to 5 volts) as represented by signal (D). When signal (D) goes from high to low it fires a crystal controlled time delay circuit 106 whose output is signal (E), a negative-going pulse, approximately 5μs in duration, which coincides with the next peak of the sine wave. The time delay is set to correspond to 1/4 cycle of the mean frequency of the cluster. Signal (E) controls the sampling of the sample and hold circuits 100 and 102, (AD583 from Analog Devices of Norwood, MA) so that at every negative going pulse a peak is sampled. Since the $X_{sum}$, $X_{diff}$, $Y_{sum}$ and $Y_{diff}$ signals are all generated by a single light pen, it is sufficient to generate a single timing signal (E) for all of these signals. The output signal (F), from the sample and hold circuits, is a stair stepping DC voltage indicative of the amplitude of the $X_{sum}$ and $X_{diff}$ sine wave signals (C) and (C'), and representive of the light spot position. Final RC filters 108 and 110 remove noise from the DC signal (F).

The DC signals (F) pass to an analog multiplexer 112 which scans them and sequentially passes the

$X_{sum}$, $X_{diff}$, $Y_{sum}$ and $Y_{diff}$ signals through a unity gain buffer 113 to an A/D converter 114 which converts each sequentially received analog voltage signal (F) and converts it into a fourteen bit digital signal. In the simplest implementation, the 14 bits (two bytes) for each $X_{sum}$, $X_{diff}$, $Y_{sum}$ and $Y_{diff}$ signal are passed by an RS232 digital controller 116 to the host computer, such as a SPARCStation-I from Sun Microsystems, of Mountain View, CA along with the single byte characterizing the button state. Thus, nine bytes are used for a single data point for a single pen. The sampling time for each data point is about 0.011 sec.

The square wave signal (D) is additionally used to differentiate among the closely clustered frequencies to determine the invoked function. A portion of the signal is tapped off and sent to a frequency-to-voltage converter 118 whose output passes to four comparators 120, 122, 124 and 126, each set at a different threshold in order to determine the exact frequency of the signal for identifying the button state of the light pen.

Output from the controller 116 feeds back channel select commands to the multiplexer 112, convert commands to the A/D converter 114, and feeds the nine bytes of data point information for the single pen to the host computer.

Since both sum and difference signals vary linearly with respect to the intensity of the light spot, a division step will yield generalized X and Y values ($\overline{X}$ and $\overline{Y}$).

$$\overline{X} = \frac{Xdiff}{Xsum} \text{ and } \overline{Y} = \frac{Ydiff}{Ysum}$$

$\overline{X}$ and $\overline{Y}$ eliminate light intensity variability owing to battery power shifts, the angle at which the light pen is held with respect to the screen, and the distance of the light pen from the center of the screen. While $\overline{X}$ and $\overline{Y}$ have a one-to-one correspondence with the X,Y location on the screen, they are generally non-linear with respect to the latter. This arises from non-linearities in the imaging lens, screen curvature, non-linearities intrinsic to the detection electronics, and other factors. A calibration procedure is used to convert $\overline{X}$ and $\overline{Y}$ to real X and Y coordinates. A regular grid of points is displayed on the screen and the $\overline{X}$, $\overline{Y}$ value of each point is measured by sequentially sampling the points as a light pen is held at that grid location. Typically, for good calibration, about 200 sampling points on the three by five foot (91.5 cm by 152.5 cm) screen are needed. $\overline{X}$, $\overline{Y}$ values for patches of the screen are fitted to X, Y coordinates using cubic splines. A subsequent linear interpolation is used to generate a lookup table for the computer.

The preferred circuitry for a system using three light pens fans out from the X and Y sum and X and Y difference square wave signals. Each of these four signals is input to each of three dedicated narrow bandpass filters (one for each mean value of the cluster of pen frequencies). The four output signals from each narrow bandpass filter are then amplified and the three groups of signals are passed to three sample and hold circuits, each controlled by a separate time delay circuit (because the mean values of the frequency clusters are different). The twelve output DC signals are input to the multiplexer 112, the A/D converter 114 and then to the host computer. Additionally, there will be three frequency-to-voltage converters and four comparators for each converter. In this manner, the complex X and Y wave forms from the position sensing photodiode 28 are separated into the positions and button states of each of the light pens.

Although the above description refers to a specific frequency generating circuit and a specific discrimination circuit, it is possible that other suitable circuits could be used. For example, for use with multiple pens, the RS232 controller 116 may be eliminated and a microcontroller substituted therefor, whose output could be sent to the host computer across an RS232 link or be direct memory access (DMA).

The illustrated embodiment relates to a projection-type computer display but it should be understood that the nature of the information display may take other forms as long as the light spots may be projected therethrough and collected upon a sensor. For example, the display may be a large area LCD or even a projected slide. In the latter case, the computer of the present system would generate the image of a pointer whose activity would be superimposed over the non-computer generated display.

Further changes are also contemplated. Instead of a single position sensor receiving the illumination from all of the light pens, several sensors having the same panchromatic response could be used with color filters to distinguish the optical output of several light pens, each emitting at a different color frequency. The function information still could be encoded in the light pen signal in any desired manner.

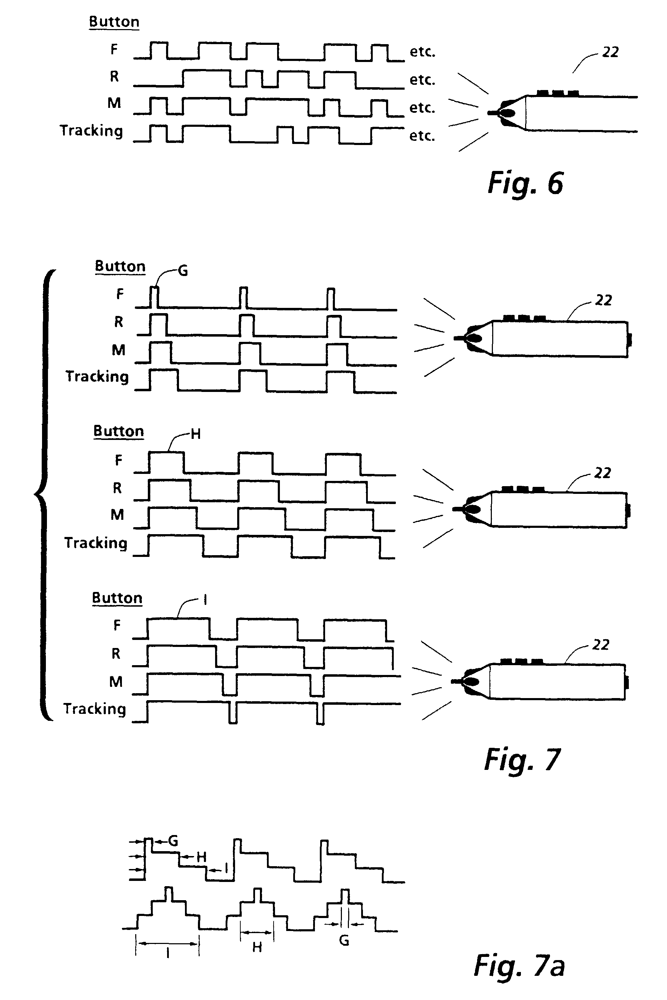

Source identity and source function may be impressed on the light pen illumination in other ways than the described square waves at predetermined unique chopping frequencies, such as, by distinct coded sequences of light flashes (illustrated for a single light pen in Figure 6) representative of the pen source and the selected function. Instead of using narrowband filters at the expected fundamental frequencies, the processing electronics would include a set of correlation filters for comparing the transmitted signals to the set of expected codes. The presence of an output for a given correlation filter would indicate the presence of a particular pen and function. The amplitude of that output would be related to the X-Y coordinate of the pen in the same manner as described for the narrowband filter embodiment. It is also possible to identify the source pen and its selected function by varying the time duration of the optical pulse (as shown in Figure 7). In Figure 7a there are illustrated two forms of a sum signal for the combined inputs of the three light pens for different phase relations between the pens. The unique pulse width for each light pen and function could be as shown. By detecting the times and heights of the transition levels in the sum signal, the processing electronics would be able to extract the G, H and I signal components and to determine the amplitude of the signal (indication of position) due to each individual pen.

## Claims

1.  An input system for entering position and function information received from each of two or more sources into an electronic system, comprising

    a viewing surface (20) having a first side and a second side opposite the first side, said viewing surface receiving illumination from two or more unique sources of illumination (22) simultaneously projected upon said first side at said viewing surface, the optical output of each one of said sources being encoded to identify said one of said sources and one of two or more functions to be performed,
    means (12) for displaying said information upon said viewing surface, and
    the electronic system, including:

    means (28, 76, 78, 80, 82) for sensing illumination simultaneously projected upon said viewing surface by at least two of said sources of illumination and for generating output signals representative thereof, said means for sensing being located on said second side of said viewing surface, and
    means (92, 94, 100, 102, 118) for receiving said output signals and for determining therefrom the identification of said illumination sources, the position or positions of said projected illumination from said sources on said viewing surface, and the identification of the functions to be performed.

2.  The input system of claim 1, wherein the optical output of each one of said sources (22) is encoded in a family of frequencies clustered about a mean frequency, with each frequency in a family identifying said one of said sources and one of two or more functions to be performed and with the mean frequency of each of the unique sources being sufficiently different from the other mean frequencies that the families of frequencies can be differentiated and wherein said means (92, 94, 100, 102, 118) for receiving and determining comprises a plurality of bandpass filters (92, 94), each capable of passing only a single family of clustered frequencies.

3.  The input system as defined in claim 2, wherein said means (92, 94, 100, 102, 118) for receiving and determining comprises frequency-to-voltage converters (118) and means (120, 122, 124, 126) for comparing said voltages with reference voltages for generating signals indicative of said functions to be performed.

4.  The input system as defined in claim 2 or claim 3, wherein said means (28, 76, 78, 80, 82) for sensing and generating is a position sensing photodiode (76, 78, 80, 82) which generates a number of current signals in response to the intensity and position of said projected illumination on said viewing surface, each of said signals comprising a superposition of square waves at said frequencies of said sources of illumination.

5.  The input system as defined in any of the preceding claims, wherein the illumination output by each source of illumination has a centroid and wherein said means (92, 94, 100, 102, 118) for receiving and determining further comprises means for generating signals representative of locations of the centroids of the illumination from the pair of unique sources of illumination and signals representative of the identified functions to be performed.

6.  The input system as defined in claim 5. wherein said means for generating signals representative of the locations of the centroids of the illumination does so in response to the amplitude of said output signals, and said means for generating signals representative of the identified functions to be performed does so in response to the frequency of said output signals

7.  The input system as defined in claim 1, wherein said means (92, 94, 100, 102, 118) for receiving and determining comprises means for identifying the positions of said illumination sources based on the amplitudes of said output signals, for identifying said illumination source or sources based on the frequency of said waves responsive to said mean frequencies, and for identifying said functions based on said waves responsive to said function identifying frequencies.

## Patentansprüche

1.  Eingabesystem zum Eingeben von Positions- und Funktionsinformationen, die von jeder von zwei oder mehr Quellen empfangen sind, in ein elektronisches System, das aufweist

    eine Betrachtungsoberfläche (20), die eine erste Seite und eine zweite Seite, gegenüberliegend zu der ersten Seite, besitzt, wobei die Betrachtungsoberfläche eine Illumination von zwei oder mehr eindeutigen Quellen einer Illumination (22) aufnimmt, die simultan auf die erste Seite an der Betrachtungsoberfläche projiziert sind, wobei die optische Ausgabe jeder einen von den Quellen so codiert wird, um die eine von den Quellen und die eine von den zwei oder mehr Funktionen, die durchgeführt werden sollen, zu identifizieren,

Einrichtungen (12) zum Anzeigen der Informationen auf der Betrachtungsoberfläche, und

wobei das elektronische System umfaßt:

Einrichtungen (28, 76, 78, 80, 82) zum Fühlen einer Illumination, die simultan auf die Betrachtungsoberfläche durch mindestens zwei von den Illuminations-Quellen projiziert sind, und zum Erzeugen von Ausgangs-Signalen, die dafür repräsentativ sind, wobei die Einrichtungen zum Fühlen auf der zweiten Seite der Betrachtungsoberfläche gelegen sind, und

Einrichtungen (92, 94, 100, 102, 118) zum Aufnehmen der Ausgangs-Signale und zum Bestimmen davon der Identifikation der Illuminations-Quellen, der Position oder der Positionen der projizierten Illumination von den Quellen auf der Betrachtungsoberfläche und der Identifikation der Funktionen, die durchgeführt werden sollen.

2. Eingabesystem nach Anspruch 1, wobei die optische Ausgabe jeder einen der Quellen (22) in einer Familie von Frequenzen codiert wird, die um eine Hauptfrequenz gruppiert sind, wobei jede Frequenz in einer Familie die eine von den Quellen und eine von zwei oder mehr Funktionen, die durchgeführt werden sollen, identifiziert, wobei die Mittenfrequenz jeder der eindeutigen Quellen ausreichend unterschiedlich von den anderen Hauptfrequenzen ist, so daß die Familien von Frequenzen differenziert werden können, und wobei die Einrichtungen (92, 94, 100, 102, 118) zum Aufnehmen und Bestimmen eine Vielzahl von Bandpaßfiltern (92, 94), aufweisen, von denen jeder zum Hindurchführen nur einer einzelnen Familie gruppierter Frequenzen geeignet ist.

3. Eingabesystem nach Anspruch 2, wobei die Einrichtungen (92, 94, 100, 102, 118) zum Aufnehmen und Bestimmen Frequenz-Spannungs-Wandler (118) und Einrichtungen (120, 122, 124, 126) zum Vergleichen der Spannungen mit Referenz-Spannungen zum Erzeugen von Signalen, die für Funktionen, die durchgeführt werden sollen, indikativ sind, aufweisen.

4. Eingabesystem nach Anspruch 2 oder Anspruch 3, wobei die Einrichtung(en) (28, 76, 78, 80, 82) zum Fühlen und Erzeugen eine eine Position fühlende Fotodiode (76, 78, 80, 82) ist, die eine Anzahl von Stromsignalen in Abhängigkeit der Intensität und der Position der projizierten Illumination auf der Betrachtungsoberfläche erzeugt, wobei jedes der Signale eine Überlagerung von Rechteckwellen bei den Frequenzen der Illuminations-Quellen aufweist.

5. Eingabesystem nach einem der vorhergehenden Ansprüche, wobei die Illuminations-Ausgabe durch jede Illuminations-Quelle einen Schwerpunkt besitzt und wobei die Einrichtungen (92, 94, 100, 102, 118) zum Aufnehmen und Bestimmen weiterhin Einrichtungen zum Erzeugen von Signalen aufweisen, die für Stellen der Illuminations-Schwerpunkte von dem Paar eindeutiger Illuminations-Quellen repräsentativ sind, und Signale, die für die identifizierten Funktionen, die durchgeführt werden sollen, repräsentativ sind, aufweisen.

6. Eingabesystem nach Anspruch 5, wobei die Einrichtungen zum Erzeugen von Signalen, die für die Stellen der Illuminations-Schwerpunkte repräsentativ sind, dies in Abhängigkeit der Amplitude der Ausgangs-Signale vornehmen, und wobei die Einrichtungen zum Erzeugen von Signalen, die für die identifizierten Funktionen repräsentativ sind, die durchgeführt werden sollen, dies in Abhängigkeit von den Frequenzen der Ausgangs-Signale vornehmen.

7. Eingabesystem nach Anspruch 1, wobei die Einrichtungen (92, 94, 100, 102, 118) zum Aufnehmen und Bestimmen Einrichtungen zum Identifizieren der Positionen der Illuminations-Quellen basierend auf den Amplituden der Ausgangs-Signale, zum Identifizieren der Illuminations-Quelle oder der Quellen basierend auf der Frequenz der Wellen, die auf die Durchschnitts-Frequenzen ansprechend sind, und zum Identifizieren der Funktionen, basierend auf den Wellen, die auf die die Funktion identifizierenden Frequenzen ansprechend sind, aufweisen.

**Revendications**

1. Système d'entrée pour entrer des informations de position et de fonction reçues en provenance de chacune de deux ou plus sources dans un système électronique comprenant :

une surface visible (20) comportant un premier côté et un second côté opposé au premier côté, ladite surface visible recevant un rayonnement en provenance de deux ou plus sources uniques de rayonnement (22) projetées simultanément sur ledit premier côté au niveau de ladite surface visible, la sortie optique de chacune desdites sources étant codée pour identifier ladite une desdites sources et l'une de deux ou plus fonctions devant être effectuées,

un moyen (12) pour afficher lesdites informations sur ladite surface visible, et

le système électronique incluant :

un moyen (28, 76, 78, 80, 82) pour détecter le rayonnement projeté simultanément sur ladite surface visible par au moins deux desdites sources de rayonnement et pour générer des signaux de sortie qui en sont représentatifs, ledit moyen pour détecter étant situé sur ledit second côté de ladite surface visible, et

un moyen (92, 94, 100, 102, 118) pour recevoir lesdits signaux de sortie et pour déterminer à partir de ceux-ci l'identification desdites sources de rayonnement, la ou les positions dudit rayonnement projeté en provenance desdites sources sur ladite surface visible et l'identification des fonctions devant être effectuées.

2. Système d'entrée selon la revendication 1, dans lequel la sortie optique de chacune desdites sources (22) est codée en une famille de fréquences groupées autour d'une fréquence moyenne, chaque fréquence dans une famille identifiant ladite une desdites sources et l'une de deux ou plus fonctions devant être effectuées et la fréquence moyenne de chacune des sources uniques étant suffisamment différente des autres fréquences moyennes pour que les familles de fréquences puisse être différenciées et dans lequel ledit moyen (92, 94, 100, 102, 118) pour recevoir et déterminer comprend une pluralité de filtres passe-bande (92, 94), dont chacun est seulement apte à laisser passer une seule famille de fréquences groupées.

3. Système d'entrée selon la revendication 2, dans lequel ledit moyen (92, 94, 100, 102, 118) pour recevoir et déterminer comprend des convertisseurs fréquence tension (118) et un moyen (120, 122, 124, 126) pour comparer lesdites tensions à des tensions de référence pour générer des signaux indicatifs desdites fonctions devant être effectuées.

4. Système d'entrée selon la revendication 2 ou la revendication 3, dans lequel ledit moyen (28, 76, 78, 80, 82) pour détecter et générer est une photodiode de détection de position (76, 78, 80, 82) qui génère un certain nombre de signaux de courant en réponse à l'intensité et à la position dudit rayonnement projeté sur ladite surface visible, chacun desdits signaux comprenant une superposition d'ondes carrées auxdites fréquences desdites sources de rayonnement.

5. Système d'entrée selon l'une quelconque des revendications précédentes, dans lequel le rayonnement en sortie de chaque source de rayonnement comporte un centroïde et dans lequel ledit moyen (92, 94, 100, 102, 118) pour recevoir et déterminer comprend en outre un moyen pour générer des signaux représentatifs d'emplacements des centroïdes du rayonnement à partir de la paire de sources uniques de rayonnement et des signaux représentatifs des fonctions identifiées devant être effectuées.

6. Système d'entrée selon la revendication 5, dans lequel ledit moyen pour générer des signaux représentatifs des emplacements des centroïdes du rayonnement agit ainsi en réponse à l'amplitude desdits signaux de sortie et dans lequel ledit moyen pour générer des signaux représentatifs des fonctions identifiées devant être effectuées agit ainsi en réponse à la fréquence desdits signaux de sortie.

7. Système d'entrée selon la revendication 1, dans lequel ledit moyen (92, 94, 100, 102, 118) pour recevoir et déterminer comprend un moyen pour identifier les positions desdites sources de rayonnement sur la base des amplitudes desdits signaux de sortie pour identifier ladite ou lesdites sources de rayonnement sur la base de la fréquence desdites ondes sensibles auxdites fréquences moyennes et en identifiant lesdites fonctions sur la base desdites ondes sensibles auxdites fréquences d'identification des fonctions.

EP 0 484 160 B1

**Fig. 1**

*Fig. 2*

Fig. 3

Fig. 4

EP 0 484 160 B1

Fig. 5

Fig. 5a

EP 0 484 160 B1

Fig. 6

Fig. 7

Fig. 7a